# EUROPÄISCHE PATENTSCHRIFT

(11) **EP 0 481 367 B1**
(45) Veröffentlichungstag und Bekanntmachung des Hinweises auf die Patenterteilung: **07.06.1995**
(21) Anmeldenummer: 91117337.5
(22) Anmeldetag: 11.10.1991
(51) Int. Cl.: B60P 3/12, B60P 3/07

(54) **Transportfahrzeug**
Transporter
Véhicule de transport

(30) Priorität: 13.10.1990 DE 9014265 U
(43) Veröffentlichungstag der Anmeldung: 22.04.1992
(73) Patentinhaber: Kübler, Harald, D-75015 Bretten (DE)
(72) Erfinder: Weber, Dieter, D-32427 Minden (DE); Kübler, Harald, D-75015 Bretten (DE)
(74) Vertreter: Stracke, Alexander, Dipl.-Ing.

(56) Entgegenhaltungen:
- EP-A- 0 076 923
- EP-A- 0 408 744
- DE-U- 9 015 174
- US-A- 4 318 656
- US-A- 4 353 597
- US-A- 4 758 128

## Beschreibung

Die vorliegende Erfindung betrifft ein Transportfahrzeug mit einem mittels einer Hubeinrichtung um eine quer zur Fahrtrichtung stehenden Horizontalachse schwenkbaren, Längsholme aufweisenden Hilfsrahmen, einer mittels eines Linearantriebes verfahrbaren Plattform, an deren Unterseite Längsprofilträger aus Profilen mit hohen Widerstandsmomenten bezüglich beider Biegeachsen befestigt sind, die gegenüber den Längsholmen des Hilfsrahmens in ihrer Längsrichtung verschiebbar geführt sind.

Ein in Rede stehendes Fahrzeug wird in der Branche als Abschlepp- oder Transportfahrzeug bezeichnet. Transportiert werden beispielsweise unfallgeschädigte Personenkraftwagen, zur Auslieferung kommende Neufahrzeuge, zurückzuholende Mietfahrzeuge und dergleichen. Um das Transportfahrzeug zu be- oder entladen wird zunächst mittels der Hubeinrichtung der Hilfsrahmen und die Plattform an der dem Fahrerhaus zugewandten Seite angehoben, so daß die genannten Teile in eine Schräglage gebracht werden. Anschließend wird mittels des Linearantriebes die Plattform entgegen der Vorwärtsfahrtrichtung ausgefahren. Der Schwenkwinkel für den Hilfsrahmen und für die Plattform ist dabei so groß, daß die hintere Kante der Plattform auf der Oberfläche einer Straße oder eines Abstellplatzes liegt. Danach kann ein Personenkraftwagen von der Plattform herunter- oder hinaufgefahren, oder, sofern daß nicht möglich ist, hinaufgezogen oder hinaufgeschoben werden.

Bei einem aus der EP 0 408 744 A1 bekannten Transportfahrzeug bestehen die Längsprofilträger und die Längsholme des Hilfsrahmens aus querschnittsgleichen U-Profilen, die hochkantstehend derart angeordnet sind, daß der untere parallele Schenkel des an der Plattform angeschweißten Längsprofilträgers den oberen parallelen Schenkel des Längsholmes des Hilfsrahmens untergreift. Bei einem solchen Fahrzeug ist es unvermeidbar, daß es insbesondere bei einer einseitigen Belastung zu einer Verwindung des Hilfsrahmens kommt und sich die verwendeten U-förmigen Längsprofilträger oder Längsholme aufbiegen. Die Plattform kann beim Einwirken von Kräften quer zur Längsachse des Hilfsrahmens durch Verbiegen beschädigt werden. Nachteilig ist außerdem, daß die Längsholme des Hilfsrahmens und die Längsprofilträger der Plattform einen relativ großen Querschnitt aufweisen. Dadurch ist auch das Gewicht entsprechend hoch, so daß das zulässige Zuladegewicht des Transportfahrzeuges herabgesetzt wird. Außerdem sind die Einzelteile der Hubeinrichtung für den Hilfsrahmen und für den Linearantrieb der Plattform schlecht zugänglich, so daß die vorbekannten Transportfahrzeuge nicht besonders wartungs- und montagefreundlich sind.

Der vorliegenden Erfindung liegt die Aufgabe zugrunde, ein Transportfahrzeug der eingangs genannten Art so weiterzuentwickeln, daß Verformungen oder Beschädigungen der tragenden Längsprofilträger der Plattform vermieden werden, wobei die gesamte Konstruktion durch Verringerung der Querschnitte ein geringeres Gewicht hat, obwohl sichergestellt werden soll, daß eine Verwindung des Hilfsrahmens auch bei einer einseitigen Belastung nicht erfolgt.

Die gestellte Aufgabe wird dadurch gelöst, daß zur Sicherung der Längsprofilträger der Plattform gegen eine Verschiebung quer zu deren Längsachse die Längsholme des Hilfsrahmens jeweils aus zwei parallel- und in einem Abstand nebeneinander angeordneten Hohlprofilstangen bestehen, wobei der Abstand höchstens etwa die Breite der Hohlprofilstangen beträgt. Durch die erfindungsgemäße Konstruktion können insbesondere die seitlichen Kräfte besonders günstig abgetragen werden. Durch die im Abstand zueinander angeordneten Hohlprofilstangen wird eine gute Führung der Längsprofilträger erreicht, so daß diese seitlich nicht mehr ausweichen, wodurch die Plattform insgesamt eine sehr stabile Lage einnimmt. Die Wandstärken der Längsprofilträger können gegenüber bekannten Konstruktionen wesentlich verringert werden, obwohl die Verwindungssteifheit und Belastbarkeit erhöht sind. Die sonst üblichen Knotenbleche oder andere Verstärkungsteile können vollkommen entfallen. Die erfindungsgemäße Konstruktion ist im Sinne einer Leichtbauweise zu sehen. Die Einzelteile der Hubeinrichtung für den Hilfsrahmen können an den Außenseiten des Fahrzeugrahmens mit einfachen Befestigungsmitteln angebracht werden. Dadurch werden alle Teile der Hubeinrichtung, zum Beispiel Schalter, Ventile, Hubarme und dergleichen leicht zugänglich, so daß die Montage und die Wartung vereinfacht werden. Die Breite des Hilfsrahmens kann gegenüber vorbekannten Konstruktionen wesentlich vergrößert werden, so daß trotz des geringeren Gewichts die Stabilität erhöht wird.

Nach einem weiteren Ausführungsbeispiel der Erfindung sind sowohl die Längsprofilträger der Plattform wie auch die Längsholme des Hilfsrahmens aus Rundrohr hergestellt.

Eine weitere Ausführungsform der Erfindung besteht darin, daß die Längsprofilträger der Plattform aus geschlossenen oder offenen Dreiecksprofilen bestehen.

Weitere Merkmale der Erfindung sind Gegenstand weiterer Unteransprüche.

Ausführungsbeispiele der Erfindung sind in dem beigefügten Zeichnungen dargestellt und werden im folgenden näher beschrieben.
Es zeigen:
- Figur 1: ein erfindungsgemäßes Transportfahrzeug, bei dem die Plattform in die Be- bzw. Entladestellung gefahren wurde,
- Figur 2: den Fahrzeug- und den Hilfsrahmen des Transportfahrzeuges nach der Figur als Einzelheit in perspektivischer Darstellung,
- Figur 3: den Hilfsrahmen und die Plattform im Querschnitt,
- Figur 4: Doppel-T-Träger der Plattform als Einzelheit im Querschnitt,
- Figur 5: einen Querschnitt durch eine Führung der Plattform eines Transportfahrzeuges nach einem weiteren Ausführungsbeispiel der Erfindung,
- Figur 6: einen Querschnitt durch einen an einem Längsholm geführten Längsprofilträger nach einem weiteren Ausführungsbeispiel der Erfindung.
- Figur 7: einen Schnitt durch einen Längsholm und einen darin geführten Längsprofilträger nach einem weiteren Ausführungsbeispiel der Erfindung.

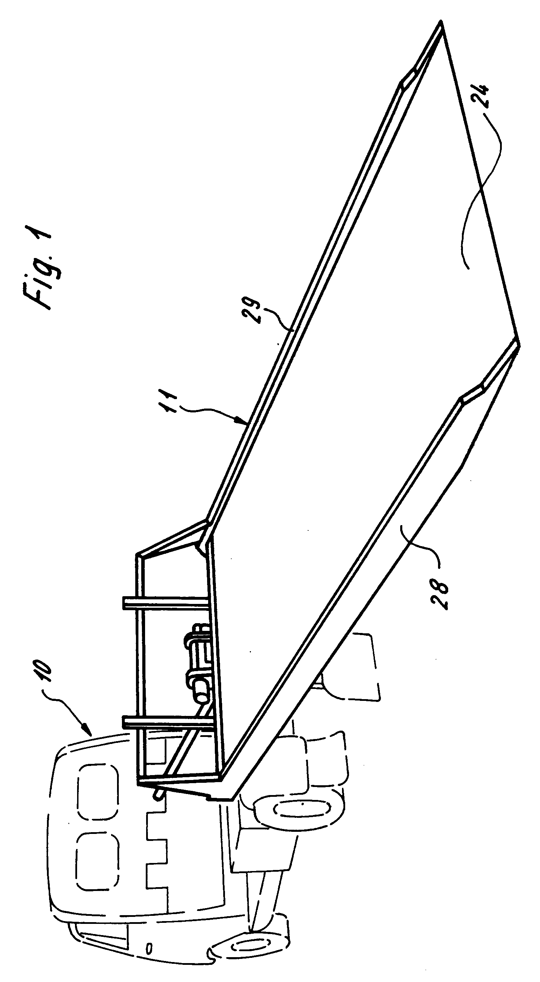

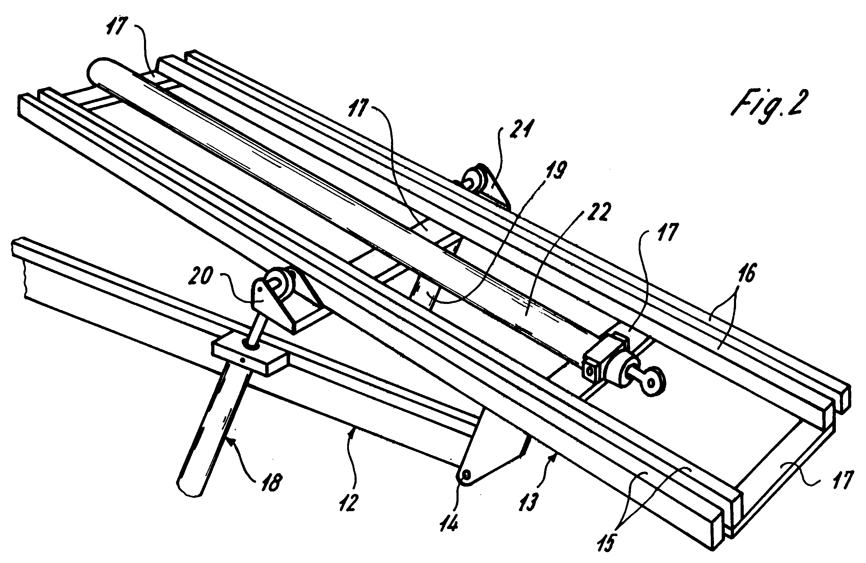

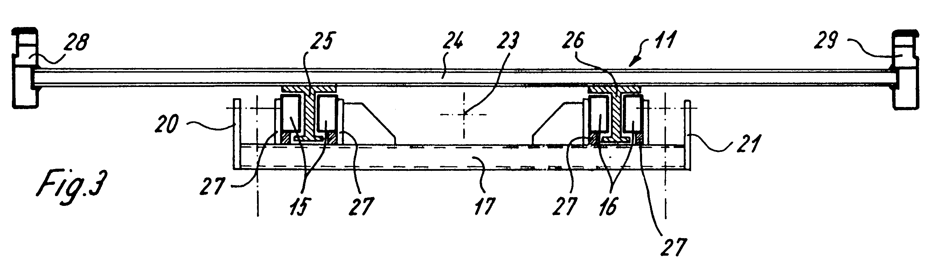

Das in Figur 1 aufgezeigte Transportfahrzeug besteht aus einem nicht näher beschriebenen Fahrgestell 10 und einer Plattform 11 zur Aufnahme eines Fahrzeuges. Das Fahrgestell 10 beinhaltet ein Führerhaus und einen in Figur 2 andeutungsweise dargestellten Fahrzeugrahmen 12. Die anhand der Figur 3 noch näher beschriebene Plattform 11 ist durch einen Hilfsrahmen 13 um eine Horizontalachse 14 schwenkbar. Die Horizontalachse 14 liegt im hinteren, d. h. dem Führerhaus abgewandten Bereich des Fahrzeugrahmens 12. Der linke und der rechte Längsholm des Hilfsrahmens 13 nach den Figuren 2 und 3 besteht aus jeweils zwei parallel und in einem geringen Abstand zueinander angeordneten Hohlprofilstangen 15, 16, die bei dieser Ausführung aus hochkant stehenden Rechteckrohren gefertigt sind. Die Hohlprofilstangen 15, 16 sind durch Quertraversen 17 miteinander verbunden, wobei sich die Anzahl nach der Länge des Hilfsrahmens 13 richtet. Die Quertraversen 17 sind den unteren Flächen der Hohlprofilstangen 15, 16 zugeordnet. Die Quertraversen 17 sind in einem gleichen oder ungleichen Abstand zueinander angeordnet, wobei die vordere und hintere Quertraverse dem vorderen und hinteren Ende des Hilfsrahmens 13 zugeordnet ist. Die Horizontalachse 14 ist, vom hinteren Ende des Hilfsrahmens 13 gesehen, im dargestellten Ausführungsbeispiel der zweiten Quertraverse 17 zugeordnet, woraus sich ergibt, daß der Hilfsrahmen 13 gegenüber dem Fahrzeugrahmen 12 nach hinten vorsteht. Im Gegensatz zu der dargestellten Ausführung könnten auch die anderen Quertraversen für die Horizontalachse 14 verwendet werden. Wiederum vom hinteren Ende des Hilfsrahmens 13 aus gesehen, greifen an den Stirnseiten einer Quertraverse 17 die als Kolbenstangen von zwei Hydraulikzylindern 18, 19 ausgebildeten Hubstangen. Durch die Hydraulikzylinder 18, 19 wird im dargestellten Ausführungsbeispiel die Hubeinrichtung gebildet. Die Quertraverse 17, an der die Kolbenstangen angreifen, kann gegenüber den Außenflächen des Hilfsrahmens 13 vorstehen, damit Gabeln 20, 21 zur Anlenkung der Kolbenstangen der Hydraulikzylinder 18, 19 gebildet werden können. Die Steuerung der Hubstangen bzw. der Hydraulikzylinder 18, 19 wird nicht näher beschrieben. Die Figur 2 zeigt, daß die die Hubeinrichtung für den Hilfsrahmen 13 bildenden Hydraulikzylinder 18, 19 an den Außenseiten des Hilfsrahmens 13 angreifen. Die Hubeinrichtung kann jedoch in nicht dargestellter Weise auch im Inneren des Fahrzeugrahmens 12 angreifen. Die Verfahrbarkeit der Plattform 11 gegenüber dem Hilfsrahmen 13 erfolgt durch einen einen Linearantrieb bildenden Hydraulikzylinder 22, der mittig zwischen den Hohlprofilstangen 15, 16 liegt und dessen Aufschub zum hinteren Ende des Hilfsrahmens 13 erfolgt. Andere Antriebsmittel, z. B. Ketten, Schubstangen oder Zahnstangen sind als Linearantrieb ebenfalls denkbar.

Die Kolbenstange des Hydraulikzylinders 22 ist in nicht näher erörterter Weise an der Unterseite der Plattform angelenkt. Bei der Ausführung nach der Figur 3 ist die Plattform aus einer Blechplatte 24 und zwei an der Unterseite angeschweißten Doppel-T-Profilträgern 25, 26 gebildet. In nicht dargestellter Weise kann die Plattform 11 auch aus Profilen gefertigt sein. Die jeweils einen Längsholm des Hilfsrahmens 13 bildenden Hohlprofilstangen 15, 16 liegen in einem Abstand zueinander, der ein klein wenig größer ist als die Dicke des Mittelsteges der Doppel-T-Träger 25, 26. Die Hohlprofilstangen 15, 16 liegen in den durch die parallelen Flansche der Doppel-T-Träger gebildeten Taschen. Damit die Plattform 11 bzw. die Doppel-T-Träger 25, 26 gegenüber den Hohlprofilstangen 15, 16 verfahrbar sind, ist zwischen der Oberseite der Quertraverse 17 und den Unterseiten der Hohlprofilstangen 15, 16 ein Abstand vorgesehen, der durch Distanzleisten 27 gebildet ist. Aus der Figur 3 ergibt sich, daß die aus der Plattform 11 und dem Hilfsrahmen 13 gebildete Konstruktion äußerst stabil ist, so daß es auch beim Auftreten von Querkräften nicht zu Beschädigungen der Plattform 11 und des Hilfsrahmens 13 kommt. Die Blechplatte 24 bzw. die Profile der Plattform 11 sind an den beiden Längsseiten mit Sicherheitsleisten 28, 29 versehen.

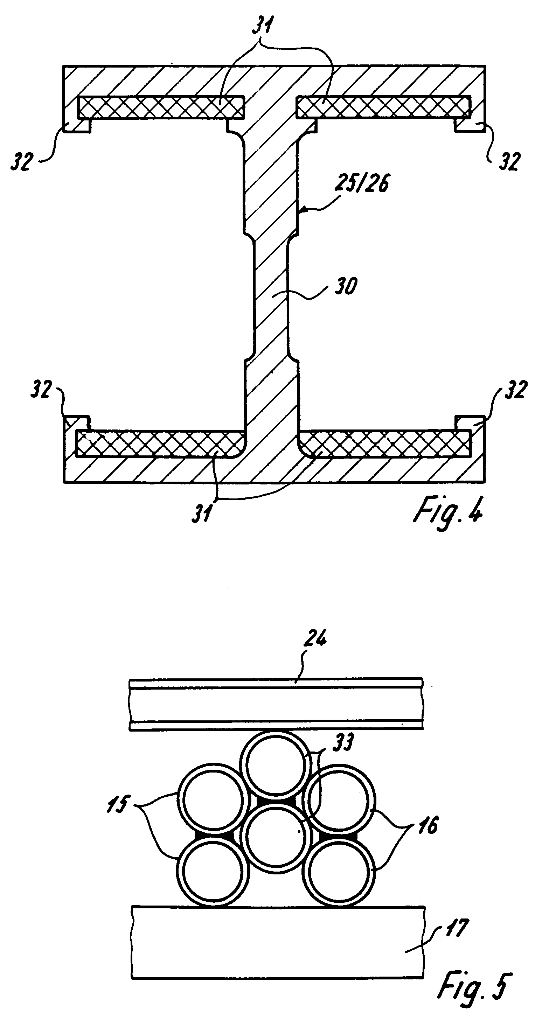

In der Figur 4 ist eine mögliche Ausführung des Querschnittes der Doppel-T-Profilträger 25, 26 dargestellt. Jeder dieser Doppel-T-Profilträger 25, 26 ist aus einer Aluminiumlegierung im Strangpreßverfahren gefertigt. Damit die Reibung zwischen den aus Stahl gefertigten Hohlprofilstangen 15, 16 und den Doppel-T-Profilträgern 25, 26 vermindert wird, ist jeder Doppel-T-Profilträger 25 im dargestellten Ausführungsbeispiel an den Innenflächen der beiden parallelen Schenkel mit einer Beschichtungen 31 versehen, die die Reibung herabsetzt und beispielsweise aus Polytetrafluoräthylen besteht. Andere Kunststoffe, metallische oder nichtmetallische Werkstoffe können ebenfalls verwendet werden. Die Beschichtungen sollten nur auf den Reibungsflächen liegen. Der Metallkern der Doppel-T-Profilträger 25, 26 ist durch das Bezugszeichen 30 gekennzeichnet. Die Beschichtungen 31 dienen nicht nur zur Verminderung der Reibung, sondern auch zur Verminderung des Verschleißes durch Abrieb. Der der Blechplatte 24 oder den Profilen zugeordnete parallele Flansch jedes Doppel-T-Profilträgers 25, 26 kann breiter oder gleich breit wie der gegenüberliegende untere Flansch sein. Außerdem sind die parallelen Flansche an den äußeren Seiten mit jeweils einem Winkelsteg 32 versehen, die in Richtung zu den gegenüberliegenden Flanschen zeigen. Dabei zeigt der freie Steg in Richtung zum Mittelsteg. Dieser Vorsprung hintergreift zur besseren Führung die äußeren Flächen der äußeren Hohlprofilstangen 15, 16 und nimmt somit das Gleitelement auf. Im mittleren Bereich ist der Mittelweg jedes Doppel-T-Profilträgers 25, 26 an beiden Seiten mit einer nutartiger Einziehung versehen. In nicht dargestellter Weise können auch diese Flächen beschichtet werden und glattflächig sein. Es ist ausreichend, wenn nur die Innenflächen des oberen Flansches beschichtet sind. Aus einer Aluminiumlegierung bestehende Doppel-T-Profilträger 25, 26 tragen zur zusätzlichen Reduzierung des Gewichtes bei. Im Gegensatz zur dargestellten Ausführung können jedoch auch handelsübliche Doppel-T-Profilträger aus Stahl verwendet werden.

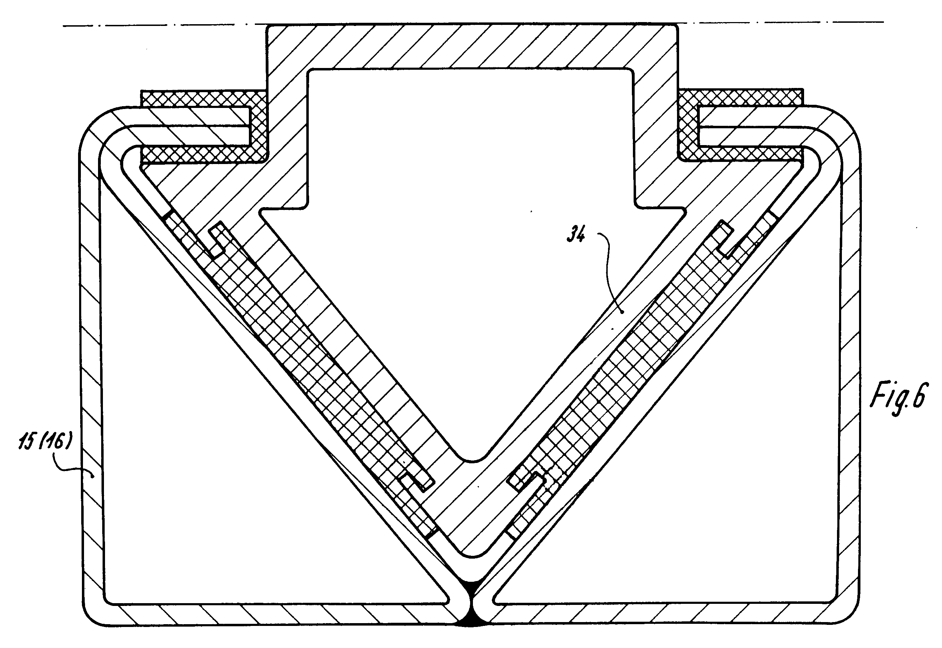

Bei der Ausführung nach der Figur 5 sind die Hohlprofilstangen 15, 16 aus zwei senkrecht übereinanderstehenden Rundrohren gebildet, die ebenfalls durch Traversen 17 miteinander verbunden sind. Die Rundrohre 15, 16 sind miteinander verschweißt. Die Längsprofilträger der Plattform 11 sind ebenfalls aus zwei miteinander verschweißten und vertikal übereinanderstehenden Rundrohren 33 gebildet. Die Rundrohre 15, 16 und 33 sind so zueinander angeordnet, daß die Rundrohre 15, 16 die Führung für die Rundrohre 33 bilden. Auch hier sind die kontaktierenden Flächen mit einer Beschichtung versehen. Im Gegensatz zu der Darstellung nach der Figur 5 könnte der Abstand zwischen den Rundrohren 15, 16 so groß sein, daß die Rundrohre 33 auch nebeneinander liegen. Es wäre dann allerdings ein Distanzstück notwendig, damit die Plattform 11 nicht auf den Rundrohren 15, 16 aufliegt. Ebenso könnten auch die Rundrohre 15, 16 nebeneinander liegen, jedoch müßten dann die Rundrohre 33 übereinanderstehen. Weitere Ausführungen sind denkbar. Bei den dargestellten Ausführungsbeispielen wird durch die Hohlprofilstangen 15, 16 mit viereckigem oder kreisförmigem Querschnitt die jeweilige Führungsprofilstange gebildet. Aus den Doppel-T-Trägern 25, 26 und den Rundrohren 33 wird dann immer ein Längsprofilträger für die Plattform 11 hergestellt. Aus den Figuren ergibt sich, daß die Längsholme des Hilfsrahmens 13 sowohl bei einem Bezug auf die vertikale Mittellängsachse als auch auf die horizontale Mittellängsachse symmetrisch ausgebildet sind. Gleiches gilt für die Längsprofilträger der Plattform 11.

Um die Plattform 11 in die Auffahrstellung zu bringen, werden zunächst die die Hubstangen bildenden Kolbenstangen der Hydraulikzylinder 18, 19 ausgefahren. Danach steht die Plattform 11 in einer solchen Schrägstellung, daß nach dem Ausfahren der Kolbenstange des Hydraulikzylinders 22 die hintere Querkante 11 auf dem Boden liegt. Je nach Größe der Plattform 11 können dann ein oder mehrere Fahrzeuge auf die Plattform 11 gebracht werden. Die gleiche Reihenfolge erfolgt, wenn die Fahrzeuge von der Plattform 11 heruntergebracht werden sollen. Um die Plattform 11 in die horizontale Transportstellung zu bringen, werden die zuvor beschriebenen Arbeitsgänge in umgekehrter Reihenfolge durchgeführt.

Die Hubeinrichtung für den Hilfsrahmen 13 kann statt aus den dargestellten Hydraulikzylindern 18, 19 ebensogut aus Spindelantrieben bestehen, Kniehebelkonstruktionen oder andere Aufstellmittel sind ebenfalls denkbar.

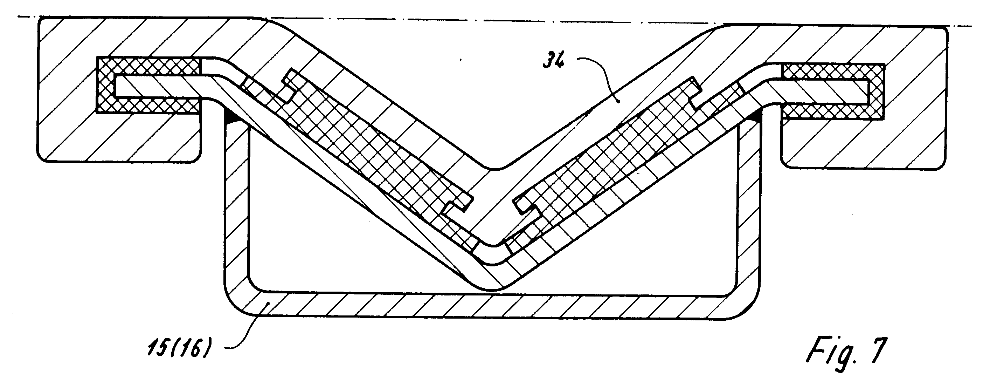

In den Figuren 6 und 7 ist gezeigt, daß die Längsprofilträger der Plattform 11 auch aus geschlossenen (sh. Figur 6) oder offenen (sh. Figur 7) Dreiecksprofilen 34 bestehen können. Auch diese Dreiecksprofile 34 können an den Gleitflächen der entsprechend profilierten Hohlprofilstangen 15 bzw. 16 des Hilfsrahmens 13 mit einer die Reibung vermindernden Beschichtung versehen sein.

Bei allen dargestellten Ausführungsbeispielen handelt es sich bei den Längsprofilträgern der Plattform 11 um Profile mit einem Querschnitt, bei denen hohe Widerstandsmomente bezüglich der Biegeachsen gegeben sind.

Abschließend sei noch darauf hingewiesen, daß der vorliegende Gedanke der Erfindung nicht nur bei einem selbstfahrenden Transportfahrzeug wie in Figur 1 gezeigt zu verwirklichen ist, sondern ohne weiteres auch bei einem Anhänger zu realisieren ist.

## Patentansprüche

1. Transportfahrzeug mit einem mittels einer Hubeinrichtung um eine quer zur Fahrtrichtung stehenden Horizontalachse schwenkbaren, Längsholme aufweisenden Hilfsrahmen (13), einer mittels eines Linearantriebes verfahrbaren Plattform (11), an deren Unterseite Längsprofilträger aus Profilen mit hohen Widerstandsmomenten bezüglich beider Biegeachsen befestigt sind, die gegenüber den Längsholmen des Hilfsrahmens (13) in ihrer Längsrichtung verschiebbar geführt sind, **dadurch gekennzeichnet, daß** zur Sicherung der Längsprofilträger der Plattform (11) gegen eine Verschiebung quer zu deren Längsachse die Längsholme des Hilfsrahmens (13) jeweils aus zwei parallel und in einem Abstand nebeneinander angeordneten Hohlprofilstangen (15, 16) bestehen, wobei der Abstand höchstens etwa die Breite der Hohlprofilstangen (15 bzw. 16) beträgt.

2. Transportfahrzeug nach Anspruch 1, **dadurch gekennzeichnet, daß** die Längsprofilträger der Plattform (11) aus Doppel-T-Profilträgern (25, 26) bestehen.

3. Transportfahrzeug nach Anspruch 1, **dadurch gekennzeichnet, daß** die Längsprofilträger der Plattform (11) und die Längsholme des Hilfsrahmens (13) aus Rundrohren (33, 15, 16) bestehen.

4. Transportfahrzeug nach Anspruch 1, **dadurch gekennzeichnet, daß** die Längsprofilträger der Plattform (11) aus geschlossenen oder offenen Dreiecksprofilen (34) bestehen.

5. Transportfahrzeug nach Anspruch 1, **dadurch gekennzeichnet, daß** die Hohlprofilstangen (15, 16) einen rechteckigen Querschnitt aufweisen.

6. Transportfahrzeug nach einem oder mehreren der vorhergehenden Ansprüche, **dadurch gekennzeichnet, daß** die Längsprofilträger und/oder die Längsholme an den aneinander gleitenden Abschnitten mit einer reibungsmindernden und verschleißfesten Beschichtung versehen sind.

7. Transportfahrzeug nach einem oder mehreren der vorhergehenden Ansprüche, **dadurch gekennzeichnet, daß** die Hubeinrichtung für den Hilsrahmen (13) aus zwei Kolben-Zylindereinheiten, vorzugsweise zwei Hydraulikzylindern (18, 19), bestehen und daß die die Hubstangen bildenden Kolbenstangen dieser Kolbenzylindereinheiten (18, 19) an den äußeren oder inneren Seiten der beiden Längsholme des Hilfsrahmen (13) angreifen.

8. Transportfahrzeug nach einem oder mehreren der vorhergehenden Ansprüche 1 bis 6, **dadurch gekennzeichnet, daß** die Hubeinrichtung für den Hilfsrahmen (13) aus Gewindespindeln besteht.

9. Transportfahrzeug nach einem oder mehreren der vorhergehenden Ansprüche 1 bis 6, **dadurch gekennzeichnet, daß** die Hubeinrichtung für den Hilfsrahmen aus Kniehebeln besteht.

10. Transportfahrzeug nach Anspruch 1, **dadurch gekennzeichnet, daß** der Abstand der zwei einen Längsholm des Hilfsrahmens (13) bildenden Hohlprofilstangen (15, 16), bezogen auf die Dicke des Mittelsteges jedes Doppel-T-Profilträgers (25) zur Bildung eines Schiebesitzes etwas größer ist als die Dicke des Mittelsteges jedes Doppel-T-Trägers (25, 26).

11. Transportfahrzeug nach einem oder mehreren der vorhergehenden Ansprüche, **dadurch gekennzeichnet, daß** die Längsprofilträger der Plattform (11) aus stranggepreßten Profilen bestehen.

12. Transportfahrzeug nach Anspruch 10, **dadurch gekennzeichnet, daß** die Längsprofilträger aus Leichtmetallprofilen, z.B. einer Aluminiumlegierung, hergestellt sind.

## Claims

1. A transport vehicle comprising an auxiliary frame (13) which has longitudinal frame members and which is pivotable by means of a lift device about a horizontal axis which is disposed transversely to the direction of travel, and a platform (11) which is displaceable by means of a linear drive and to the underside of which are fixed longitudinal profile bearers comprising profile members with high moments of resistance in respect of both bending axes and which are guided displaceably in their longitudinal direction relative to the longitudinal frame members of the auxiliary frame (13), characterised in that to safeguard the longitudinal profile bearers of the platform (11) against displacement transversely to the longitudinal axis thereof the longitudinal frame members of the auxiliary frame (13) each comprise two hollow profile bars (15, 16) which are arranged parallel and at a spacing in side-by-side relationship, wherein the spacing is at most approximately the width of the hollow profile bars (15 and 16 respectively).

2. A transport vehicle according to claim 1 characterised in that the longitudinal profile bearers of the platform (11) comprise double-T-profile bearers (25, 26).

3. A transport vehicle according to claim 1 characterised in that the longitudinal profile bearers of the platform (11) and the longitudinal frame members of the auxiliary frame (13) comprise round tubes (33, 15, 16).

4. A transport vehicle according to claim 1 characterised in that the longitudinal profile bearers of the platform (11) comprise closed or open triangular profile members (34).

5. A transport vehicle according to claim 1 characterised in that the hollow profile bars (15, 16) are of a rectangular cross-section.

6. A transport vehicle according to one or more of the preceding claims characterised in that the longitudinal profile bearers and/or the longitudinal frame members are provided at the portions which slide against each other with a friction-reducing and wear-resistant covering.

7. A transport vehicle according to one or more of the preceding claims characterised in that the lift device for the auxiliary frame (13) comprises two piston-cylinder units, preferably two hydraulic cylinders (18, 19), and that the piston rods, forming the lift rods, of said piston-cylinder units (18, 19) engage the outer or inner sides of the two longitudinal frame members of the auxiliary frame (13).

8. A transport vehicle according to one or more of preceding claims 1 to 6 characterised in that the lift device for the auxiliary frame (13) comprises screwthreaded spindles.

9. A transport vehicle according to one or more of preceding claims 1 to 6 characterised in that the lift device for the auxiliary frame comprises bell crank levers.

10. A transport vehicle according to claim 1 characterised in that the spacing of the two hollow profile bars (15, 16) forming a longitudinal frame member of the auxiliary frame (13), relative to the thickness of the central web portion of each double-T-profile bearer (25), is somewhat larger than the thickness of the central web portion of each double-T-bearer (25, 26), to form a sliding fit.

11. A transport vehicle according to one or more of the preceding claims characterised in that the longitudinal profile bearers of the platform (11) comprise extruded profile members.

12. A transport vehicle according to claim 10 characterised in that the longitudinal profile bearers are produced from light metal or alloy profile members, for example an aluminium alloy.

## Revendications

1. Véhicule de transport comportant un cadre auxiliaire (13) présentant des longerons et susceptible de pivoter, au moyen d'un dispositif de levage, autour d'un axe horizontal perpendiculaire au sens de déplacement du véhicule, et comportant une plate-forme (11), déplaçable au moyen d'un entraînement linéaire, sur la face inférieure de laquelle sont fixés des supports profilés longitudinaux, en profilé présentant des moments de résistance élevés vis-à-vis des deux axes neutres, qui sont susceptibles d'être déplacés, dans le sens de leur longueur, par rapport aux longerons du cadre auxiliaire (13), caractérisé en ce que, pour empêcher que les supports profilés longitudinaux de la plate-forme (11) ne se déplacent perpendiculairement à leur axe longitudinal, les longerons du cadre auxiliaire (13) sont constitués, chacun, de deux tiges profilées creuses (15, 16) disposées de façon parallèle et espacée l'une à côté de l'autre, l'écart correspondant au maximum à environ la largeur des tiges profilées creuses (15 ou 16).

2. Véhicule de transport selon la revendication 1, caractérisé en ce que les supports profilés longitudinaux de la plate-forme (11) sont constitués de supports profilés (25, 26) en forme de double T.

3. Véhicule de transport selon la revendication 1, caractérisé en ce que les supports profilés longitudinaux de la plate-forme (11) et les longerons du cadre auxiliaire (13) sont constitués de tubes ronds (33, 15, 16).

4. Véhicule de transport selon la revendication 1, caractérisé en ce que les supports profilés longitudinaux de la plate-forme (11) sont constitués de profilés triangulaires (34) fermés ou ouverts.

5. Véhicule de transport selon la revendication 1, caractérisé en ce que les tiges profilées creuses (15, 16) présentent une section rectangulaire.

6. Véhicule de transport selon l'une ou plusieurs des revendications précédentes, caractérisé en ce que les supports profilés longitudinaux et/ou les longerons sont pourvus, au niveau des portions qui glissent les unes sur les autres, d'un revêtement diminuant la friction et résistant à l'usure.

7. Véhicule de transport selon l'une ou plusieurs des revendications précédentes, caractérisé en ce que le dispositif de levage destiné au cadre auxiliaire (13) est constitué de deux unités piston-cylindre, de préférence de deux vérins hydrauliques (18, 19), et en ce que les tiges de piston de ces unités piston-cylindre (18, 19), formant les tiges de levage, s'appliquent au niveau des faces extérieures ou intérieures des deux longerons du cadre auxiliaire (13).

8. Véhicule de transport selon l'une ou plusieurs des revendications précédentes 1 à 6, caractérisé en ce que le dispositif de levage destiné au cadre auxiliaire (13) est constitué de tiges filetées.

9. Véhicule de transport selon l'une ou plusieurs des revendications précédentes 1 à 6, caractérisé en ce que le dispositif de levage destiné au cadre auxiliaire est constitué de leviers à genouillère.

10. Véhicule de transport selon la revendication 1, caractérisé en ce que l'écart entre les deux tiges profilées creuses (15, 16), constituant un longeron du cadre auxiliaire (13), par rapport à l'épaisseur de l'entretoise de chaque support profilé en double T (25) est, pour constituer une surface de coulissement, légèrement supérieur à l'épaisseur de l'entretoise de chaque support en double T (25, 26).

11. Véhicule de transport selon l'une ou plusieurs des revendications précédentes, caractérisé en ce que les supports profilés longitudinaux de la plate-forme (11) sont constitués de profilés extrudés.

12. Véhicule de transport selon la revendication 10, caractérisé en ce que les supports profilés longitudinaux sont fabriqués en métal léger, par exemple en alliage d'aluminium.
